# DEMANDE DE BREVET EUROPEEN

(11) **EP 0 997 830 A1**
(43) Date de publication de la demande: **03.05.2000**
(21) Numéro de dépôt: 99402683.9
(22) Date de dépôt: 28.10.1999
(51) Int. Cl.: G06F 17/30

(54) **Procédé et système de traitement d'entités à valeurs ordonnées**

(30) Priorité: 30.10.1998 FR 9813638
(71) Demandeur: BULL S.A., 78434 Louveciennes Cedex (FR)
(72) Inventeur: Bonnaud, Alain, 78000 Versailles (FR); Frerebeau, Laurent, 78000 Versailles (FR); Vallot, Max, 78220 Viroflay (FR)

(57) **Abrégé**

L'invention concerne un procédé de traitement de valeurs ordonnées, formant un espace fini, organisé sous la forme d'un graphe orienté, et utilisé comme valeurs d'attribut. Le procédé comprend la création et l'utilisation d'un type de données, dit type "graphe", obtenu par la saisie et le stockage d'une définition du graphe, de valeurs de noeuds, de relations entre les valeurs de noeuds.

L'invention concerne aussi un système de gestion de bases de données relationnelles pour la mise en oeuvre du procédé, soit d'un type classique, soit d'un type modifié (3") incluant un opérateur (61) interprétant directement le type de données graphe (e"14, e"22), présent dans une table de description de structure (*table 1, table 2*), et une table (51) mémorisant les caractéristiques de ce type de données.

L'invention s'applique notamment à la gestion de privilèges de sécurité.

## Description

La présente invention concerne un procédé de traitement d'entités à valeurs ordonnées, notamment de données informatiques.

Elle concerne aussi un système mettant en oeuvre le procédé, et notamment un système de gestion de bases de données relationnelles.

Elle concerne plus particulièrement l'application de ce procédé à la gestion de privilèges de sécurité, plus spécifiquement encore dans un système de traitement de l'information, pour le contrôle d'accès sécurisé à des ressources protégées.

Dans le cadre de la présente invention, le terme "ressource" doit être compris dans son sens le plus large. Il englobe notamment des applications logicielles, des bases de données ou des fichiers, voire des champs particuliers de ces fichiers, des systèmes complets ou des machines de traitement de l'information, des dispositifs particuliers, tels que des périphériques (imprimantes, etc.), etc.

Bien que le terme "privilège" doive être pris dans un sens large, il convient d'opérer une distinction claire entre celui-ci et le terme "droit", également communément utilisé dans le domaine de la sécurité.

Dans le cadre de la présente invention, le terme "privilège" est associé à des objets, par exemple des personnes physiques. Pour un système de traitement de l'information, il peut s'agir d'un administrateur système, d'un analyste, d'un programmeur, etc. Chacune de ces personnes possède précisément un certain nombre de privilèges auxquels vont être associés des "droits" sur les différents éléments du système de traitement de l'information (fichiers, programmes, etc.), tels que les droits d'écriture, de lecture, d'effacement, etc., qui sont généralement répertoriés dans des listes d'accès, plus communément connues sous le terme "access list", selon la terminologie anglo-saxonne.

Les différentes entités visées par l'invention s'inscrivent habituellement dans un environnement hiérarchique qui peut être formalisé par un ou plusieurs diagrammes ou sous-ensembles hiérarchisés exprimant les liens et niveaux de dépendances entre entités pour chacun des sous-ensembles.

Un certain nombre de règles régissent habituellement un sous-ensemble hiérarchisé, et parmi celles-ci les suivantes :
- il existe au moins un niveau de hiérarchie, et généralement *n* niveaux (le niveau 1 étant supposé être arbitrairement le plus haut niveau de la hiérarchie) ;
- à chaque niveau *i*, il peut exister plusieurs entités distinctes, *i* étant compris entre 1 et *n* ;
- une entité donnée, de niveau hiérarchique *i*, est associée à un ou plusieurs attributs et partage le ou les attributs de la ou les entité(s) de niveau immédiatement inférieur *i*+1 qui lui est (sont) liée(s).

Ce qui vient d'être rappelé pour un niveau hiérarchique arbitraire *i* est vrai pour tous les niveaux, sauf naturellement pour les entités de niveau hiérarchique le plus bas (niveau *n*).

Dans l'art connu, les types de données utilisées classiquement sont notamment les suivants : "booléen", "entier", "chaîne de caractères", etc. Aucun de ces types de données n'est satisfaisant pour gérer facilement les entités de sous-ensembles hiérarchisés.

On a également proposé un type de données dit "énuméré". Il s'agit d'une valeur choisie parmi une liste prédéterminée et finie de valeurs.

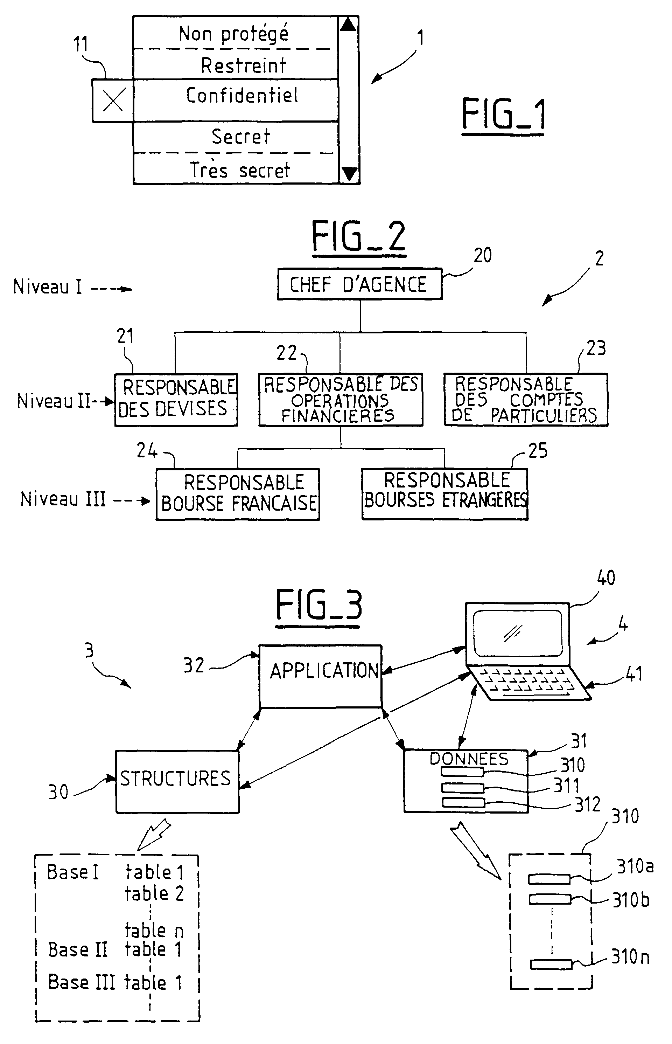

A titre d'exemple non exhaustif, la figure 1 placée en fin de la présente description, illustre schématiquement l'utilisation d'un tel type de données pour décrire les différentes valeurs que peut prendre une habilitation à une matière dite "classifiée défense", à savoir, dans l'exemple décrit, les niveaux "non protégé", "restreint", "confidentiel", "secret" et "très secret".

De façon pratique, le processus se traduit le plus souvent par l'affichage sur un écran 1 d'une liste 10 des valeurs précitées sous la forme d'un menu déroulant. Un "bouton radio" 11 sur lequel on peut cliquer à l'aide d'un dispositif de pointage (souris ou autre) permet de sélectionner la valeur désirée, "confidentiel" dans l'exemple illustré sur la figure 1.

Le choix de la valeur "confidentiel" n'implique pas automatiquement que l'habilitation à ce niveau englobe les niveaux inférieurs, c'est-à-dire "restreint" et, *a fortiori,* "non protégé".

On constate aisément que, même si l'on s'en tient à un exemple de sous-ensemble hiérarchique très simple, qui plus est ne comporte qu'une entité à chaque niveau hiérarchique, l'utilisation de données du type "énuméré" ne permet pas une gestion complète et optimisée de celui-ci.

L'invention se fixe pour but un procédé de traitement d'entités ordonnées associées à des attributs, qui ne présente pas les inconvénients des procédés de l'art connu.

Pour ce faire, le procédé propose un nouveau type de données dont la valeur est choisie dans un espace fini d'entités ordonnées. Ces entités sont organisées hiérarchiquement. L'affectation d'une de ces entités à un objet équivaut à lui affecter toutes les entités qui en sont dérivées.

Le procédé selon l'invention peut être mis en oeuvre pour la réalisation d'un nouveau système de gestion de bases de données relationnelles. Il reste cependant compatible avec les systèmes de gestion de bases de données relationnelles existants qui ne supportent pas directement le type de données précité.

De tels systèmes de gestion de bases de données relationnelles trouvent une application particulièrement intéressante dans le domaine de la sécurité, notamment pour la gestion informatique de privilèges.

L'invention a donc pour objet un procédé de traitement dans un système informatique d'entités constituant des valeurs ordonnées dans un espace fini, les dites entités formant les noeuds d'un graphe orienté et étant liées entre elles par des relations déterminées constituant des branches dudit graphe orienté, chaque entité étant associée à au moins un attribut, caractérisé en ce qu'il consiste à saisir et à stocker dans des moyens de mémorisation un type de donnée défini par :
- un identifiant dudit graphe orienté;
- les valeurs de noeuds dudit graphe orienté;
- les relations déterminées entre lesdites valeurs de noeuds;
et à retrouver, lorsqu'une entité dudit graphe est associée à un objet dudit type du système, des attributs de l'entité concernée, d'autres entités dudit graphe, ou encore des attributs d'autres entités dudit graphe, à l'aide d'un opérateur d'interprétation dudit graphe stocké dans des moyens de mémorisation.

L'invention a encore pour objet un système de gestion de base de données relationnelle mettant en oeuvre ce procédé et plus particulièrement un système de gestion de base de données relationnelle.

L'invention a aussi pour objet l'application à un procédé de gestion de privilèges pour le contrôle d'accès à des ressources protégées.

L'invention sera mieux comprise et d'autres caractéristiques et avantages apparaîtront à la lecture de la description qui suit en référence aux figures annexées, parmi lesquelles :
- la figure 1 illustre schématiquement l'utilisation d'un type de données dit "énuméré" pour représenter une liste de valeurs hiérarchisées et en sélectionner une parmi la liste ;
- la figure 2 est un exemple d'organigramme hiérarchique décrivant la structure d'une société ;
- la figure 3 illustre schématiquement l'architecture d'un système de gestion de base de données relationnelles selon l'art connu ;
- la figure 4 illustre schématiquement l'architecture d'un système de gestion de base de données relationnelles mettant en oeuvre le procédé de l'invention, selon un premier mode de réalisation ;
- la figure 5 illustre schématiquement l'architecture d'un système de gestion de base de données relationnelles mettant en oeuvre le procédé de l'invention, selon un second mode de réalisation ;
- les figures 6A et 6B illustrent un exemple d'acquisition de données à l'aide d'un écran de saisie, pour la mise en oeuvre du procédé selon l'invention ;
- et la figure 7 illustre un exemple d'organigramme de gestion de privilèges mettant en oeuvre le procédé selon l'invention.

On va maintenant décrire le procédé de l'invention de façon plus détaillée, par référence à la figure 2.

Pour illustrer le procédé, on va considérer un organigramme 2 d'une société, en l'occurrence celui d'une agence bancaire. Cet organigramme comporte trois niveaux hiérarchiques : *"Niveau I"* à *"Niveau III",* comprenant une ou plusieurs entités à chaque niveau et des liens entre entités. De façon pratique, il est possible de représenter l'organisation de l'agence, sous forme graphique, par un arbre comprenant des cases (noeuds) reliées entre elles par des branches. Dans l'exemple décrit, les entités représentées dans chaque case correspondent à des fonctions dans la société. On trouve, au niveau supérieur, le *"Chef d'agence"* 20, au deuxième niveau, le *"Responsable des devises"* 21, le *"Responsable des opérations financières"* 22 et le *"Responsable des comptes particuliers"* 23, et au troisième niveau, le *"Responsable Bourse française"* 24 et le *"Responsable bourses étrangères"* 25. A chaque entité, on alloue un certain nombre d'attributs, qui sont associés, dans le cas présent, à la fonction dans la société. On suppose enfin que l'entité de niveau le plus élevé ("Niveau I") se voit allouer tous les attributs des entités de niveaux inférieurs, que l'on appellera dérivées. Il en est de même pour les entités de niveaux intermédiaires. Ainsi, à titre d'exemple, le " *Responsable des opérations financières"* 22, du *"Niveau II"* a aussi les attributs des entités du *"Niveau III",* puisqu'elles lui sont toutes rattachées. Pour ce dernier niveau, il n'y a naturellement aucune entité dérivée. Dans l'exemple simple décrit, c'est également le cas des entités *"Responsable des devises"* 21 et *"Responsable des comptes particuliers" 23,* qui n'ont pas de subordonnés.

Les données relatives aux diverses entités représentées sur l'organigramme de la figure 2 peuvent être enregistrées dans un système de gestion de bases de données relationnel. Cependant, malgré l'absence de complexité de cet organigramme, qui ne comporte qu'un nombre très restreint d'entités, il n'existe pas de moyens, supportés par les bases de données classiques, permettant de décrire simplement et d'exploiter les attributs associés directement à une entité quelconque de l'organigramme, d'une part, et ceux qui proviennent des entités qui lui sont dérivées, d'autre part. Dans la réalité, le nombre d'entités à traiter est souvent très élevé. En outre, une entité d'un niveau *i* quelconque peut être rattachée à deux entités distinctes ou plus du niveau supérieur (*i*-1). On généralise donc la notion d'arbre à la notion de graphe orienté, ce qui augmente encore le degré de complexité et la lourdeur d'utilisation.

Selon une caractéristique importante de l'invention, on créé et utilise un nouveau type de donnée que l'on peut appeler "type de données à valeurs ordonnées dans un espace fini", ou plus simplement de "type graphe" ci-après. Ce type de données va permettre de représenter directement un espace fini de valeurs ordonnées.

Avant de décrire plus avant le procédé selon l'invention, on va tout d'abord rappeler brièvement les caractéristiques d'un système de gestion de bases de données classique, plus particulièrement du type dit "Système de Gestion de Base de Données Relationnelles", qui sera appelé simplement "SGBDR" ci-après, par exemple : Oracle ®, Sybase ®, Informix ® ou autre.

Un "SGBDR", comme illustré schématiquement par la référence 3 sur la figure 3, comprend, d'un point de vue logique, deux zones distinctes de stockage. Dans la réalité, ces deux zones peuvent être physiquement localisées dans une même unité de mémoire. Un "SGBDR" stocke généralement plusieurs bases de données, relatives à des applications distinctes : par exemple une base de données du personnel de l'entreprise, une base de données des clients, etc., qui peuvent ou non comporter des liens entre elles.

La première zone de stockage, 30, du "SGBDR" 3, est destinée à la mémorisation de la structure des différentes bases de données, et la seconde zone de stockage, 31, est destinée au stockage des données proprement dit. Dans l'exemple décrit, on a supposé que le "SGBDR" 3 héberge trois bases distinctes correspondant à trois lots de données, 310 à 312, chacune comprenant une ou plusieurs tables. Les tables, quand il en existe plusieurs, peuvent partager des données entre elles, permettant d'initialiser des relations. A titre d'exemple, la base de données 310 comprend *n* tables de données 310*a*, 310*b*, ..., 310*n*. Dans la première zone de stockage, 30, on enregistre la structure de ces bases de données, 310 à 312, et des tables qui les composent. A titre d'exemple, on a indiqué, sur la figure 3, que la *"base I"* (correspondant au lot de données 310), comprenait les tables *"table 1"* à *"table n"* (correspondant aux tables 310*a* à 310*n* précitées, enregistrées dans la zone 31). On décrit de même les deux autres bases : *"base II"* (311) et *"base III"* (312).

Toujours à titre d'exemple, on suppose que la base de données "*base I*" est une base de données appelée "personnel de l'entreprise", dont l'une des tables de données, par exemple 310*a*, répertorie les collaborateurs d'une entreprise et leur fonction. La structure de cette dernière table pourrait être typiquement celle décrite dans le "TABLEAU I" en annexe de la présente.

La première colonne de ce tableau représente le numéro de colonne de cette table, c'est-à-dire le champ correspondant. Le premier champ donne le nom du collaborateur, c'est également le nom de champ. Le nom de champ est complété par un type de donnée supporté par le "SGBDR", en l'occurrence un type dit "chaîne de caractère". Enfin, on trouve usuellement un modificateur optionnel, sous la forme de conditions à remplir : par exemple, le champ "Nom" ne peut pas comporter de chiffres et toutes les lettres doivent être en majuscule, etc. Dans l'exemple, le deuxième champ est la date de naissance. Il s'agit d'un type de donnée dit "date". Le modificateur peut interdire, par exemple, de saisir des dates postérieures à la date du jour et imposer un format particulier, par exemple "JJMMAA" (deux caractères pour le jour, le mois et l'année, dans l'ordre spécifié). Le champ *n*-1 est la fonction dans l'entreprise et le champ n est relatif aux privilèges directes de cette fonction. Dans les deux cas, les données sont habituellement du type précité "chaîne de caractères", et sont associées ou non à des conditions. Par exemple, les fonctions, ainsi que les privilèges directs associés aux fonctions, doivent figurer dans une liste prédéfinie. Comme il a été indiqué, il existe d'autres types de données : entiers, binaires, booléens, mémos, énumérés (figure 1), etc.

La zone 30 mémorise également toutes les autres caractéristiques des bases, des tables et des différents champs : relations, indexage, etc.

La zone 30 mémorise enfin un certain nombre de propriétés, règles, opérateurs, fonctionnalités et caractéristiques propres au "SGBDR" considéré. Elle mémorise notamment les types de données supportés par le "SGBDR" et leurs caractéristiques, ainsi que les modificateurs possibles.

On associe habituellement au "SGBDR" proprement dit un logiciel 32, interne (fourni en standard) et/ou externe, que l'on appellera applicatif ci-après. Cet applicatif a accès aux deux zones d'enregistrement et utilise les fonctionnalités et outils standards fournis par le "SGBDR". Avantageusement, le logiciel 32 forme une interface entre le "SGBDR" et une console d'opérateur ou similaire 4, comprenant, en sus de circuits électroniques et logiciels classiques permettant son bon fonctionnement (non représentés), un clavier de saisie de données et/ou d'instructions 41, et un organe de visualisation 40. Le logiciel applicatif 32 permet d'accéder à une ou plusieurs bases de données particulières, parmi celles enregistrées, par exemple en soumettant des requêtes. Pour ce faire, le logiciel applicatif 32 commande avantageusement l'affichage d'écrans interactifs (menus déroulants par exemple) sur l'organe de visualisation 40.

Si les "SGBDR" classiques permettent d'appréhender de façon appropriée une partie des caractéristiques d'une entité du type de celle décrite en regard de l'organigramme de la figure 2, notamment les privilèges qui lui sont directement associés, ils ne permettent en aucun cas de rendre compte simplement des privilèges "indirects", c'est-à-dire ceux des entités dérivées.

Le procédé de l'invention, en mettant en oeuvre le nouveau type de données précité, permet d'affecter à une valeur de champ tous les attributs des valeurs qui lui sont dérivées, dans un espace ordonné fini. Cette attribution est, soit directe, en modifiant l'architecture d'un "SGBDR" classique, de la façon qui va être explicitée ci-après, soit indirecte, en ne modifiant pas cette architecture mais en interposant une pièce de logiciel intermédiaire entre le "SGBDR" et le logiciel applicatif associé à celui-ci.

Quel que soit son mode d'implémentation, le procédé selon l'invention comprend les étapes qui vont être énumérées ci-dessous, étapes qui permettent de créer et caractériser complètement une donnée du type conforme à l'invention.

Le procédé de traitement dans un système informatique d'entités constituant des valeurs ordonnées dans un espace fini, les dites entités formant les noeuds d'un graphe orienté et étant liées entre elles par des relations déterminées constituant des branches dudit graphe orienté, chaque entité étant associée à au moins un attribut, consiste à saisir et à stocker dans des moyens de mémorisation un type de donnée défini par :
- un identifiant dudit graphe orienté; l'identifiant est le nom de l'arbre, ou de façon plus générale, du graphe orienté associé à cet espace fini d'entités ordonnées.
- les valeurs de noeuds dudit graphe orienté;
- les relations déterminées entre lesdites valeurs de noeuds ;
et à retrouver, lorsqu'une entité dudit graphe est associée à un objet dudit type du système, des attributs de l'entité concernée, d'autres entités dudit graphe, ou encore des attributs d'autres entités dudit graphe, à l'aide d'un opérateur d'interprétation dudit graphe stocké dans des moyens de mémorisation.

La saisie peut s'effectuer, par exemple, à l'aide d'un clavier.

De façon préférentielle, le procédé consiste également à vérifier la cohérence de l'espace fini de valeurs ordonnées, ce dernier devant obéir aux règles gouvernant les graphes orientés. A titre d'exemple, il ne doit pas exister de rebouclage. Pour ce faire, on peut utiliser une pièce de logiciel spécialisé qui analyse les branches du graphe saisi et mémorisé, et donc sa topologie.

Dans l'exemple précédemment décrit, le nom attribué à la donnée de type graphe peut être *"fonction dans l'entreprise"* (étape N° 1).

Pour réaliser les étapes N° 2 et 3, différentes méthodes sont utilisables. Il est possible de partir d'un organigramme du type de celui de la figure 2 : chaque case (noeud) représente une des fonctions de l'entreprise. Les relations sont directement dérivables du graphique, qui peut être affiché sur un organe de visualisation ou imprimé.

Il est également possible de partir d'un tableau, tel le "TABLEAU II" annexé en fin de la présente description. La colonne N° 1, intitulée : "Nom de type" concerne la définition de l'espace fini des valeurs ordonnées, soit le nom de la donnée de type graphe *"fonction dans l'entreprise".* On a supposé qu'il n'y avait qu'une seule donnée de ce type (un seul graphe), mais il pourrait naturellement en exister d'autres dans un "SGBDR". Dans la colonne N° 2, on a porté les différents noms d'entité (fonctions dans l'entreprise). Enfin, dans la colonne N° 3, on a porté les noms de valeurs dérivées. A titre d'exemple, pour la fonction *"secrétaire",* il n'y a pas de valeurs dérivées, alors que pour la fonction *"Responsable projet",* supposée se trouver au niveau hiérarchique le plus élevé, il existe une valeur dérivée : *"Responsable développement".* Il peut naturellement en exister plusieurs.

On peut enfin, de façon connue en soi, représenter l'espace fini de valeurs ordonnées sous la forme d'un tableau matriciel à deux dimensions (non représenté).

Une fois les étapes ci-dessus réalisées, lorsque le procédé selon l'invention est mis en oeuvre dans un "SGBDR", on construit, de façon classique, une ou plusieurs bases de données qui vont utiliser des données du type "graphe" selon l'invention. On décrit ces bases de données, leurs tables et les différents champs les composant.

A titre d'exemple non limitatif, on a représenté, dans le "TABLEAU III" placé en fin de la présente description, un exemple de ligne d'une table de base de données. Ce tableau comporte quatre champs : un champ *"Nom",* de type "chaîne de caractères", un champ *"N° matricule",* de type "entier décimal", un champ *"âge",* également de type "entier décimal", et un champ nommé *"fonction dans l'entreprise".*

Selon le procédé de l'invention, ce champ indique des données de "type graphe". Les "SGBDR" de l'art connu ne peuvent supporter ce type de données spécifique à l'invention. Aussi, la mise en oeuvre du procédé selon l'invention dans un "SGBDR" peut s'effectuer selon deux modes de réalisation.

Dans un premier mode de réalisation, une entière compatibilité avec les "SGBDR" de l'art connu est conservée, ce qui représente un avantage lorsque l'on désire implémenter le procédé de l'invention dans un "SGBDR" existant sur un système de traitement de l'information. Cependant, comme il le sera montré, cette compatibilité est obtenue au prix de performances moins élevées que celles pouvant être obtenues par une modification de l'architecture du "SGBDR", de la façon décrite ci-après.

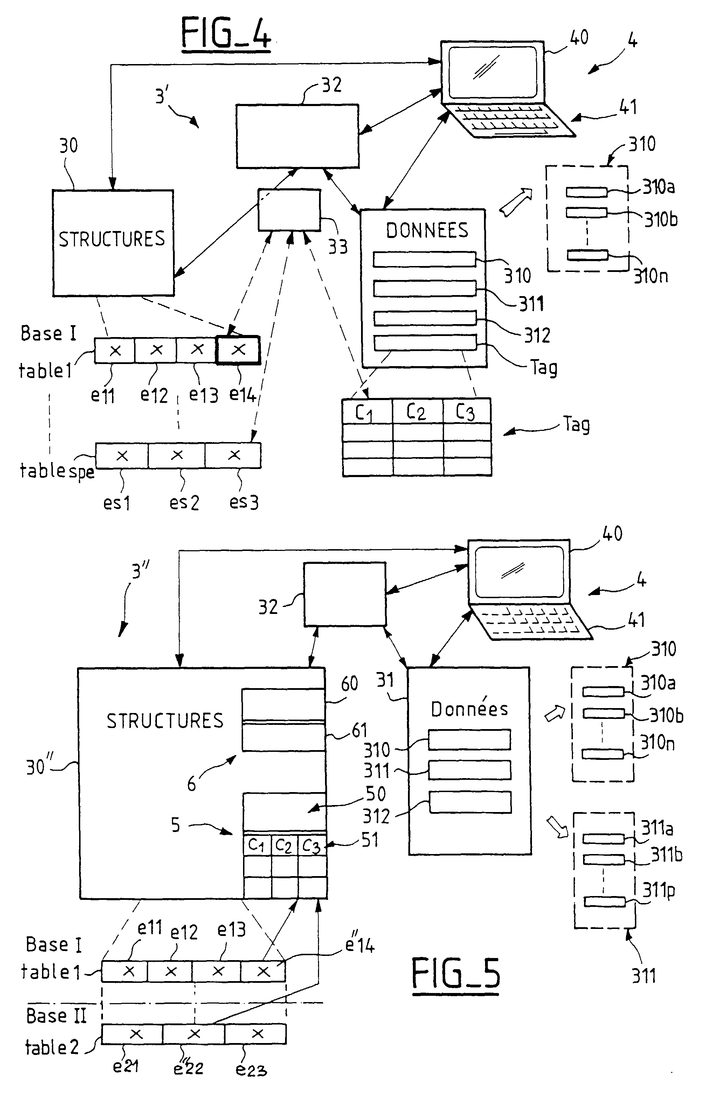

La figure 4 illustre schématiquement, sous forme d'un bloc diagramme, l'architecture d'un "SGBDR" pour la mise en oeuvre du procédé selon l'invention, selon un premier mode de réalisation. Le "SGBDR" est désormais référencé 3', mais, comme il vient d'être rappelé, dans ce mode de réalisation, les zones d'enregistrement de structure 30 et de données 31, c'est-à-dire le "SGBDR" proprement dit, conservent une configuration entièrement conforme à l'art connu. On peut donc utiliser tout "SGBDR" du commerce, notamment ceux précédemment cités. De même, l'applicatif 32 peut être utilisé sans modifications, pour le moins sans modifications substantielles. Les éléments communs avec la figure 3 portent les mêmes références et ne seront redécrits qu'en tant que de besoin.

Dans ce mode de réalisation, on prévoit une pièce de logiciel additionnelle 33 formant interface entre l'applicatif 32 et le "SGBDR", et notamment entre l'applicatif 32 et la zone d'enregistrement de structure de base de données 30.

Dans un but d'illustration du procédé, on n'a représenté sur la figure 4 qu'une seule base de donnée : 310 décrite par les enregistrements *"base I".* On décrit la structure des bases de données et des tables qui les composent, de la façon usuelle explicitée en regard de la figure 3. Une seule table de description *"table 1"* a été représentée. Cette description est enregistrée dans la zone 30.

A titre d'exemple, on suppose que la table de données 310*a*, mémorisée dans la zone 31, comprend quatre champs ou colonnes. La table de description *"table 1"* comprend donc aussi quatre enregistrements, *e*11 à *e*14. La configuration de cette table est illustrée par le "TABLEAU IV" placé en fin de la présente description. L'enregistrement *e*11 décrit la première colonne de la table de données 310*a*, en l'occurrence : champ "Nom", données de type "chaîne de caractères" et modificateur éventuel *"conditions 1".* L'enregistrement *e*12 décrit la deuxième colonne, en l'occurrence : champ "N° matricule", données de type "entier" et modificateur éventuel *"conditions 2".* L'enregistrement *e*13 décrit la troisième colonne, en l'occurrence : champ "âge", données de type "entier" et modificateur éventuel *"conditions 2".* Puisqu'il s'agit d'un système de l'art connu, le "SGBDR" ne peut supporter que des types de données classiques : "chaîne de caractères", "entier", "date", etc. Or, on désire que certains champs, par exemple le champ de la colonne N° 4 *("fonction dans l'entreprise"),* décrit par l'enregistrement *e*4, représentent une donnée conforme au procédé de l'invention, c'est-à-dire une donnée du type "graphe".

Pour ce faire, on utilise pour l'enregistrement e14 un type de donnée classique, supporté par le "SGBDR", en l'occurrence le type "chaîne de caractères". On pourrait également utiliser un type "entier", si le nom est codé. Cependant, le nom de champ décrit par l'enregistrement *e*14, *"fonction dans l'entreprise",* est spécifique et est détecté comme tel par la pièce de logiciel additionnel 33, qui l'interprète comme étant relatif à un champ de type "graphe".

Pour pouvoir exploiter cette information, on prévoit une table additionnelle, *"table spe"* dans l'exemple décrit, qui décrit la structure d'une table de données, également additionnelle, *Tag.* Celle-ci enregistre les informations relatives aux données de type "graphe". Cette table de données *Tag* est saisie et mémorisée dans la zone d'enregistrement de données 31. Le terme "table de données" doit être interprété dans son sens le plus général : table proprement dite, matrice à deux dimensions, fichier, etc. A titre d'exemple, la table de données *Tag* peut être du type de celle illustrée par le "TABLEAU II", placée en fin de la présente description. La table additionnelle *"table spe",* est enregistrée dans la zone 30 et possède une configuration similaire à celle des autres tables. La configuration typique de cette table supplémentaire *"table spe"* est illustrée par le "TABLEAU V", placé en fin de la présente description. Elle comporte trois enregistrements. Le premier enregistrement, *eS*1, décrit la première colonne, *C*1, de la table Tag mémorisée dans la zone 31 : nom de la donnée de type "graphe" *("fonction dans l'entreprise",* en l'occurrence), type de données (par exemple de type "chaîne de caractères") et modificateurs éventuels *("conditions* 1"). Le deuxième enregistrement, *eS*2, décrit la deuxième colonne, *C*2, : valeur de noeud, type de données (par exemple de type "chaîne de données") et modificateurs éventuels *("conditions 2").* Le troisième enregistrement, *eS*3, décrit la troisième colonne, *C*3, : liens (c'est-à-dire les valeurs dérivées), type de données (par exemple de type "chaîne de caractères") et modificateurs éventuels *("conditions 3").*

Pour résumer le processus de traitement de données, on doit bien comprendre que la pièce de logiciel additionnel 33 coopère avec un applicatif principal 32, auquel elle est interfacée. Dans une variante supplémentaire, si l'applicatif est externe au "SGBDR" et à condition de modifier le code de ce dernier, la pièce de logiciel 33 peut être intégrée dans l'applicatif 32. Lorsqu'une des tables, par exemple 310*a*, d'une des bases de données hébergées par le "SGBDR", 310, doit être accédée, les caractéristiques de cette table 310 (structure) sont tout d'abord lues dans la zone 30 (*"table 1"*). Lorsque la table *"table 1"* est lue, la pièce de logiciel additionnel 33 détecte que l'enregistrement e14 est relatif en réalité à une donnée de type "graphe", ce qui occasionne un renvoi à la table supplémentaire *"table spe".* Celle-ci est alors lue, sous la commande de cette pièce de logiciel additionnel 33, ce qui permet d'acquérir la structure de la table *Tag,* et de pouvoir lire les données enregistrées dans cette table.

De façon plus détaillée, et à titre d'exemple, lorsque la table de données 310*a* décrite par la table *"table 1"* doit être accédée et que des données de cette table 310*a* doivent être lues, en tout ou partie, selon un traitement particulier sous la commande de l'applicatif 32, les données correspondant aux colonnes N° 1 à 3 sont recherchées dans la table 310*a*, de façon entièrement classique, cette fonctionnalité étant offerte en standard par le "SGBDR" 3'. Le contenu des colonnes N° 1 à 3 de cette table 310*a* est décrit par les enregistrements *e*11 à *e*13 de la table *"table 1"*. Par contre, si une donnée du type graphe doit être accédée, c'est la pièce de logiciel additionnel 33 qui prend le relais des opérateurs internes au "SGBDR", en utilisant la description de structure de la table de données *"Tag"*, mémorisée par la table additionnelle *"table spe"* à laquelle renvoie l'enregistrement *e*14. Les caractéristiques de la donnée de type "graphe" sont obtenues à partir de la table *"Tag".*

Naturellement, les opérations d'écriture et/ou d'effacement s'effectuent de façon similaire, et il n'y a pas lieu de les décrire plus avant.

Le premier mode de réalisation qui vient d'être décrit est intéressant en ce sens qu'il est entièrement compatible avec les "SGBDR" existants. Il ne nécessite aucune adaptation du code propre à ces "SGBDR". Tant les tables supplémentaires de description, *"table spe"*, que la table supplémentaire de données, *"Tag"*, sont, en soi, tout à fait semblables aux autres tables des zones 30 et 31. Seuls les contenus informationnels différent, mais de façon transparente pour les opérateurs internes au "SGBDR". La détection de champs particuliers, tels ceux contenus dans l'enregistrement e14, renvoyant à une table de description spécifique, *"table spe"* est réalisée sous la commande d'une pièce de logiciel extérieur au "SGBDR", formant interface entre celui-ci et un logiciel applicatif non modifié, ou pouvant être intégré à ce dernier. Les champs particuliers sont codés en faisant appel à un type de données classique, supporté par le "SGBDR". Cependant, ce mode de réalisation n'est pas optimisé et les performances que l'on peut en attendre, notamment en termes de temps de traitement, ne sont pas non plus maximales. En effet, les données de type "graphe" sont implémentées dans le "SGBDR" seulement de façon implicite, puisque ce type n'est pas reconnu ni supporté par les outils fournis en standard. L'enregistrement *e*14 renvoie à une table supplémentaire, *"table spe",* qui à son tour décrit une table de données spécifique, *Tag,* enregistrée dans la zone 31. Le processus permettant l'accès à la donnée finale est donc ralenti. En outre, on doit effectuer des modifications pour chaque nouvelle application. Il est nécessaire de modifier le code de la pièce de logiciel additionnel 33.

On va maintenant décrire le second mode de réalisation, par référence à la figure 5, mode qui constitue une variante préférée de mise en oeuvre du procédé de l'invention dans un "SGBDR".

Sur cette figure 5, on a représenté de façon schématique l'architecture d'un "SGBDR" modifié pour mettre en oeuvre directement le procédé selon l'invention. Le "SGBDR" est désormais référencé 3". Les éléments communs aux figures précédentes portent les mêmes références et ne seront redécrits qu'en tant que de besoin.

On suppose, comme précédemment, que le "SGBDR" héberge trois bases de données, 310 à 312. On a représenté plus particulièrement les tables des bases 310 et 311, comprenant *n* et *p* tables, respectivement. La zone d'enregistrement de données 31 conserve une configuration inchangée, puisqu'elle ne comporte que des moyens de mémorisation passifs, sous la dépendance de la seconde zone, désormais référencée 30", et du logiciel applicatif 32.

Par contre, la zone 30" de stockage de descriptions des structures des bases de données et des tables la composant ont subi plusieurs modifications.

Tout d'abord, on a représenté, de façon schématique, une aire d'enregistrement 5, inclue dans la zone 30". Cet aire enregistre les différents types de données reconnus et supportés par le "SGBDR". De façon purement arbitraire, on a subdivisé cette aire en deux parties : la première partie, 50, mémorise des données caractéristiques aux types de données classiques, communs à l'art connu ("chaîne de caractères", "entier", "booléen", etc.), et la seconde partie, 51, enregistre des données caractéristiques au type de donnée "graphe", spécifique à l'invention. Cette partie comprend notamment un tableau ou similaire (matrice, etc.) décrivant les différents noms de graphes, les valeurs de noeuds et les liens dérivés. Sa configuration est tout à fait similaire à celle illustrée par le "TABLEAU II", disposé en fin de la présente description.

On prévoit également une seconde aire d'enregistrement 6, dont une partie, 61, est spécifique à l'invention. La première partie, 60, de cette aire 6 est destinée à l'enregistrement d'opérateurs du type de ceux fournis en standard par les "SGBDR" de l'art connu. La seconde partie, 61, est destinée à l'enregistrement d'opérateurs spécifiques permettant la manipulation des données du type "graphe". Des exemples de tels opérateurs seront précisés ci-après.

On va maintenant décrire, de façon plus détaillée, le mode de fonctionnement du "SGBDR" 3", modifié conformément à l'invention.

A titre d'exemple, on suppose que la structure de la table 310a, de la base de données 310, est décrite par la table *"table 1"* dans la zone d'enregistrement 30". On suppose, comme précédemment, que cette table 310a comporte quatre colonnes (champs) et que sa description est similaire à celle donnée par le "TABLEAU IV", placé en fin de la présente description. La table de description *"table 1"* comporte donc aussi quatre enregistrements. Les trois premiers sont entièrement conformes à ceux du "TABLEAU IV" précité, et il n'y a pas lieu de les redécrire. Les types de données sont classiques et donc communs à l'art connu. Par contre le quatrième enregistrement, référencé *e*"14, décrit une donnée de type "graphe". Dans ces conditions, le type de données indiqué est aussi "graphe". Ses caractéristiques complètes sont recherchées directement dans l'aire de mémorisation 51, en fonction du nom de type "graphe" trouvé dans l'enregistrement *e*"14 *("fonction dans l'entreprise").* Pour ce faire, la quatrième ligne du "TABLEAU IV" est remplacée par la ligne unique du "TABLEAU VI", placé en fin de la présente description. On constate que la deuxième position de mémoire contient bien le nouveau type de données.

Il n'est plus nécessaire de prévoir une table supplémentaire, comme précédemment (figure 4 *"table spe"*), ni d'enregistrer une table supplémentaire de données *("Tag")* dans la zone 31. Le processus de manipulation de données de type "graphe" est donc fortement accéléré.

Pour illustrer plus complètement le procédé, on va maintenant considérer la base de données 311, qui comprend les tables 311*a*, 311*b*, à 311*p*. On suppose que la table de données 311*b* comporte trois colonnes ou champs. La table de description "table 2" comprend donc aussi trois enregistrements, *e*21, *e*"22 et *e*23, dont deux, *e*21 et *e*23, concernent des types de données classiques. Par contre, si le deuxième champ de la table 311*b* concerne une donnée du type "graphe", le deuxième enregistrement *e*"22 décrit également une donnée du type "graphe" et ses caractéristiques complètes sont recherchées directement dans l'aire de mémorisation 51, en fonction du nom de type "graphe" trouvé dans l'enregistrement *e*"22. Ce nom peut être le même que précédemment ou concerner un autre espace fini de données ordonnées, repéré par un nom de type qui lui est propre.

Le type de donnée "graphe" conforme à l'invention et ses caractéristiques, stockées dans l'aire 51, sont donc reconnus directement par le "SGBDR", au même titre que les types de données plus conventionnels, dont les caractéristiques sont stockées dans l'aire 50. Comme pour les types de données conventionnels, on peut aussi prévoir des modificateurs optionnels, ce qui permet d'imposer des conditions à respecter, si besoin est.

La saisie des données de type "graphe" et leur mémorisation dans l'aire 51 peuvent être effectuées lors de la saisie des données de description d'une base de données, en cours de création ou de modification (ajout, suppression ou modification de tables), et leur enregistrement dans les tables de description de structure (*"Base I" :* "*table 1"*, *"Base II" : "table 2"*, etc.). La saisie des données de type "graphe" correspond aux étapes 1 à 3 précédemment décrites du procédé général.

On prévoit un outil logiciel spécifique, enregistré dans l'aire de mémorisation 61, d'analyse de la table (ou similaire) enregistrée dans l'aire de mémorisation 51. Cet outil constitue un module générique d'interprétation des espaces finis de données ordonnés. Il attribue aux valeurs d'un noeud d'un graphe donné, toutes les valeurs qui lui sont dérivées, ou bien il permet de décider de l'appartenance d'un noeud à une portion du graphe.

On prévoit avantageusement d'autres opérateurs d'interprétation du graphe spécifiques, ou bibliothèque de fonctions, pour le traitement et l'exploitation des données de type "graphe". Ces opérateurs sont enregistrés, par convention, dans l'aire 61 et viennent compléter les opérateurs habituellement disponibles dans les "SGBDR" classiques. Ces derniers opérateurs sont enregistrés, par convention, dans l'aire de mémorisation 60.

A titre d'exemples non limitatifs, les opérateurs spécialisés pour le traitement des données du type "graphe" permettent de répondre aux requêtes suivantes posées par l'applicatif 32 (dans les exemples précédemment décrits) :
- est-ce que la valeur *"Secrétaire"* fait partie du type de données "graphe" : *"fonction dans l'entreprise" ;* ou
- est-ce que la valeur *"Secrétaire"* dérive de la valeur *"Responsable projet",* etc.

Les opérateurs se présentent sous la forme de lignes de code, permettant d'effectuer une tâche prédéfinie. A titre d'exemple, pour la dernière requête indiquée ci-dessus, le code associé à un opérateur spécialisé commande l'analyse des branches du graphe orienté, en tenant compte des règles habituelles à ce type d'objet. L'opérateur spécialisé pour cette tâche va pouvoir ainsi déterminer si l'assertion *"secrétaire dérive de la valeur responsable projet"* est valide.

Pour ce faire, les opérateurs consultent la table enregistrée dans l'aire de mémorisation 51.

On va maintenant décrire un exemple pratique d'application du procédé selon l'invention, en relation avec l'utilisation de bases de données.

Pour ce faire on se reporte de nouveau à l'organigramme de la figure 2 décrivant les relations hiérarchiques entre les différentes fonctions présentes dans l'entreprise, en l'occurrence une agence bancaire. A cet organigramme est sous-jacent un arbre orienté qui peut être représenté, selon le procédé de l'invention, par un type de donnée "graphe". On attribue à la donnée le nom de *"fonction dans l'entreprise".*

Les valeurs de noeuds, c'est-à-dire les fonctions, ne préjugent pas des personnes qui vont les exercer. On peut constituer un fichier "personnel", ou table de même nom, dans une base de données. Pour simplifier la description, on suppose que la table "personnel" ne comporte que trois champs ou colonnes : "Nom", "Prénom" et *"fonction dans l'entreprise".* Comme il a été rappelé, on décrit la structure de la base de données "personnel", notamment de la table ci-dessus, dans la zone d'enregistrement de structures (par exemple fig. 5 : 30"). Les deux premiers champs sont du type "chaîne de données" et le troisième est du type "graphe", spécifique au procédé de l'invention.

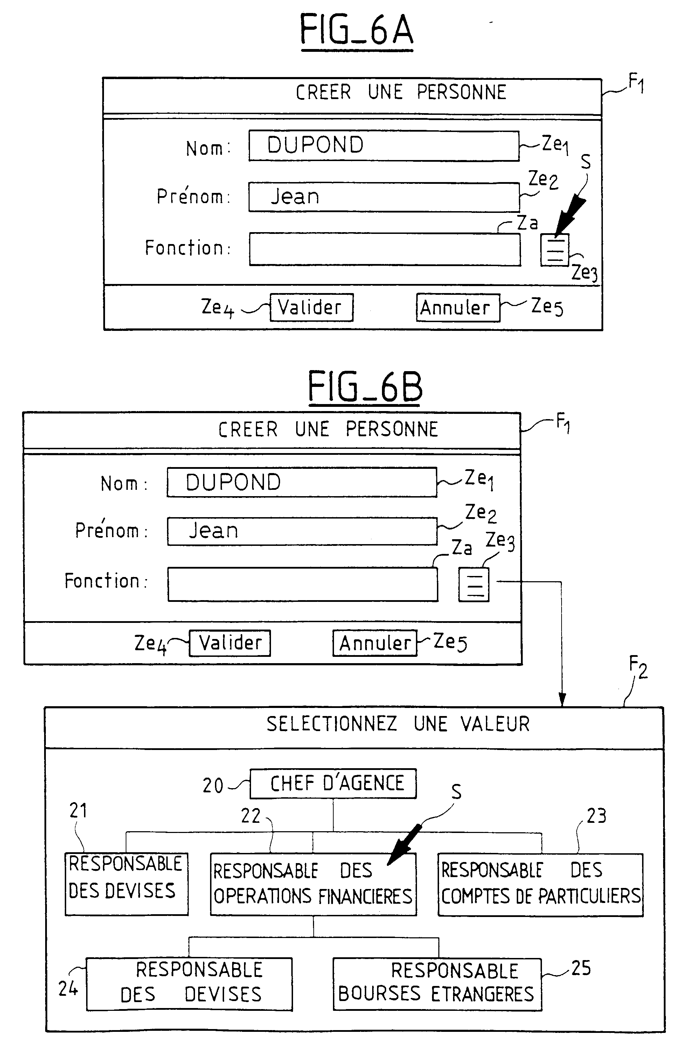

Sous la commande de l'applicatif 32, ou si les outils fournis en standard par le "SGBDR" le permettent, on créé un formulaire de saisie de données affiché par une première fenêtre *F*1, sur un organe de visualisation, par exemple l'écran 40 de la console opérateur 4. Cette fenêtre *F*1 est illustrée plus particulièrement par la figure 6A. Outre un cadre et des indications textuelles et/ou graphiques appropriées, destinées à guider l'opérateur, le masque de saisie comporte deux zones d'entrée, *Ze*1 et *Ze*2, permettant la saisie des champs *"Nom"* et *"Prénom".* Le modificateur associé au champ *"Nom"* peut imposer, par exemple, une saisie en lettres majuscules. D'autres conditions peuvent être imposées pour ces deux champs. Le contenu des champs précités est saisi, de façon classique, à l'aide du clavier 41.

Dans l'exemple décrit, la zone d'entrée, *Ze*3, pour la saisie du champ *"fonction dans l'entreprise"* se réduit à un simple "bouton radio", placé en regard d'une zone d'affichage de cette fonction *Za*. En cliquant sur ce bouton radio *Ze*3, à l'aide d'un organe de pointage *S*, du type "souris" par exemple, l'opérateur provoque l'affichage d'une seconde fenêtre *F*2, comme illustré par la figure 6B, sur le même écran ou en remplacement de la première fenêtre *F*1. En effet, le fait de cliquer sur le bouton radio *Ze*3 indique au "SGBDR" que la donnée correspondante est du type "graphe". Les outils internes à celui-ci, dans le mode préféré (figure 5), ou externes (pièce de logiciel additionnel 33 : figure 4) consultent les tables de description des données de type graphe et recherche les caractéristiques de la donnée de type "graphe" nommée *"fonction dans l'entreprise".* La fenêtre *F*2 affiche alors l'organigramme hiérarchique de la figure 2, avantageusement sous forme graphique (arborescence). L'opérateur choisit, sur l'organigramme affiché, la fonction à attribuer à la personne en cours de traitement, dont il a déjà saisi les nom et prénom. Il lui suffit alors de cliquer sur la case correspondante avec la souris *S*, en l'occurrence la case 22, pour saisir la fonction (valeur de noeud) *"Responsable des opérations financières",* qui s'affiche sur la fenêtre *F*1, dans la zone *Za*. Cette action attribue automatiquement à la personne qui vient d'être saisie, les privilèges directs associés à la fonction qu'elle occupe, mais aussi les privilèges dérivés *("Responsable Bourse française"* et *"Responsable bourses étrangères",* dans l'exemple décrit), s'ils existent, ce sans que l'opérateur ait à s'en préoccuper.

La fenêtre *F*1 affiche également, de façon classique, deux autres boutons radio, *Ze*4 et *Ze*5, destinés à la validation des données saisies ou à leur annulation, respectivement. Pour ce faire, il suffit de cliquer sur l'un ou l'autre de ces boutons radio, *Ze*4 et *Ze*5.

Si l'annulation est sélectionnée, aucune donnée n'est prise en compte et le processus est réitéré.

Dans le cas contraire (validation), les données constituent un enregistrement (ligne) de la table "personnel". Lors d'un traitement ultérieur de ces données, l'applicatif utilisateur, par exemple l'applicatif 32, connaissant la description des champs, et notamment la description du champ *"fonction dans l'entreprise",* est en mesure d'acquérir toutes les caractéristiques liées à ce dernier champ par consultation des tables de description de structure de ce type de données. Il attribue à la valeur accédée toutes les valeurs dérivées.

Dans une application réelle, il existe naturellement d'autres masques de saisie classiques, notamment pour traiter les opérations de modification et de suppression d'enregistrements dans une table. Le processus de modification s'effectue de façon similaire à ce qui vient d'être décrit. On peut, soit remplacer une personne par une autre, dans une fonction donnée, soit modifier la fonction d'une personne. La suppression se traduit par l'effacement d'un enregistrement dans la table, logique ou réel.

Dans tous les cas, il n'y a pas d'interférences avec les tables de description de structure de données de type "graphe" qui ne sont pas modifiées par les opérations de création, modification ou suppressions d'enregistrements dans la zone de stockage de données 31. Seules des modifications de la structure même des graphes orientés (ajout, modification ou suppression de fonctions, dans l'exemple décrit) nécessitent une modification de ces tables de description de structure de données de type "graphe" (aire de mémorisation 51), au même titre que les création, modification ou suppression de tout ou partie des tables de données nécessitent une intervention de l'opérateur sur les tables de description de structure de base de données.

On constate donc que le procédé de l'invention permet une grande souplesse de gestion des données dans un contexte d'espace de valeurs ordonnées. Elle simplifie notamment l'affectation d'attributs à ces valeurs et formalise les relations qui existent entre ces valeurs.

Le procédé selon l'invention s'applique à de nombreux domaines. Il en est de même des bases de données mettant en oeuvre le procédé, directement (figure 5) ou indirectement (figure 4). L'invention s'applique notamment à la gestion de privilèges de sécurité, pour l'accès à des ressources protégées.

L'intérêt d'un modèle de gestion de privilèges est important. Actuellement, la majorité des outils de gestion de la sécurité s'orientent vers un modèle de gestion dit "role-based" ou "privilege-based", selon la terminologie anglo-saxonne. Cette évolution s'explique par la souplesse d'administration du contrôle d'accès que permet l'utilisation de privilèges de sécurité dans la gestion des droits d'accès des utilisateurs sur des ressources, au sens général de ce terme, par exemple des ressources informatiques, des ressources de l'entreprise, etc. Il existe cependant une difficulté : l'approche "privilège" favorise la multiplication du nombre de privilèges pour une gestion fine des contrôles d'accès. Il s'ensuit une mise en oeuvre très complexe. Il est donc particulièrement important qu'un modèle de gestion de privilèges propose une simplification de la gestion de ces privilèges, ce qui simplifie la tâche des administrateurs de sécurité, et donc diminue corrélativement les coûts d'administration de la sécurité. Le procédé selon l'invention répond à ces besoins.

Pour fixer les idées, et sans que cela constitue une quelconque limitation de la portée de l'invention, on va maintenant décrire brièvement un exemple de système de gestion de privilèges de sécurité dans lequel le procédé de l'invention pourrait être mis en oeuvre.

La Demanderesse a proposé un système informatique de gestion d'accès sécurisé à des ressources protégées, mis dans le commerce sous la référence commerciale "AccessMaster" (marque déposée), et son modèle d'administration de privilèges.

Le système "AccessMaster" propose notamment un modèle de gestion d'utilisateurs, de rôles d'utilisateur, de privilèges d'accès, de données d'authentification primaire (par mot de passe, carte à puce, jeton-carte, etc.) et de données d'authentification secondaires (noms de compte et mot de passe permettant de se connecter à une machine donnée).

Dans la système "AccessMaster", un utilisateur est représenté par un objet "Personne", qui définit en fait une "personne physique", et non pas un "compte utilisateur" sur une machine ou un système donné ("SGBD", application de "groupware", etc). Une personne physique peut avoir plusieurs comptes utilisateur sur des machines ou des systèmes différents.

Un "privilège" est un attribut associé à une personne ("Nom", "Prénom", "Fonction dans l'entreprise", "Niveau d'habilitation", etc.) dont la valeur détermine des droits d'accès sur des ressources du système de traitement de l'information accessibles au travers d'applications ou d'autres composants.

Un privilège peut être spécifique à une application (seule l'application qui l'utilise pour contrôler l'accès à ses ressources est capable de lui donner un sens et d'interpréter sa valeur) ou, au contraire, il peut être compris par un ensemble d'applications (un privilège *"fonction dans l'entreprise"* dont la valeur est *"Gestionnaire de parc"* a un sens et peut être utilisé aussi bien par une application de type *"Gestion de parc",* que par une application de type *"Découverte, analyse et configuration du parc").*

La valeur d'un privilège peut être :
- spécifique d'une personne ; c'est le cas de la valeur d'un attribut *"Nom", "Prénom", "Numéro de répertoire",* etc.
- commune à plusieurs personnes ; c'est le cas d'un attribut *"fonction dans l'entreprise" ("Secrétaire", "Comptable",* etc.), *"Niveau d'habilitation" ("Confidentiel Défense",* "Secret Défense", etc.), etc.

Un *"Rôle utilisateur"* dans "AccessMaster" se définit comme une collection d'attributs partageables par plusieurs utilisateurs. Ces attributs sont des privilèges lorsque leur valeur est utilisée à des fins de contrôle d'accès.

Une *"Personne"* dans "AccessMaster" peut être associée à plusieurs *"Rôles Utilisateur".* Par contre, elle ne peut se connecter qu'avec un seul rôle à la fois.

Les conditions d'utilisation de ce *"Rôle utilisateur"* sont décrites dans un ensemble d'attributs de la personne constituant son *"Profil opérationnel".* Ce profil décrit en particulier les méthodes d'authentification autorisées pour pouvoir utiliser ce rôle, les jours et heures pendant lesquels l'utilisateur peut s'authentifier, etc.

D'un point de vue matériel, le système "AccessMaster" comprend notamment une base de données dite "sécurisée", la "S.I.B".(pour "Security Information Base") dans laquelle sont stockées les informations concernant les utilisateurs, leurs moyens d'authentification (primaires ou secondaires), leurs privilèges, et une interface graphique d'administration, incorporée dans un dispositif équivalent à la console 4 (figure 5, par exemple). C'est le cas également de la plupart des systèmes de gestions d'accès sécurisés à des ressources.

Le rappel succinct des caractéristiques de ce système de gestion d'accès sécurisés existant montre que le procédé selon l'invention est susceptible de s'appliquer avec profit à la gestion des privilèges de sécurité, en attribuant à certaines données le type "graphe".

De façon générale, on définit deux types principaux d'objets :
- des objets appelés *"Classes de privilèges" ;* et
- des objets appelés *"Privilèges",* dérivant d'une *"Classe de privilège"* particulière.

On définit enfin une arborescence pour chaque *"Classe de privilèges"* qui organise les instances d'objets *"Privilèges"* en graphe orienté. En d'autres termes, on définit une suite de relations.

Les objets et les relations entre objets sont saisis et stockés dans la base de données sécurisée.

Si l'on attribue le type de données "graphe" à l'objet *"Classes de privilèges",* on peut mettre en oeuvre le procédé selon l'invention. La base de données sécurisée comprend une partie description de structure qui mémorise une table, ou équivalent, de description des données de type "graphe", c'est-à-dire les objets *"Classes de privilèges" ;* les données telles que "Nom", "Prénom", etc. sont enregistrés de façon classique dans des tables de données de la zone enregistrement de données.

La gestion de la base de données sécurisée peut s'effectuer à l'aide de formulaires similaires à celui décrit en regard des figures 6A et 6B, et affichés par l'éditeur graphique précité.

Dans une variante de réalisation, on peut définir d'autres types d'objets que l'on appellera *"Groupes de privilèges"* permettant de rassembler des objets *"Privilèges"* dérivant de la même *"Classe de Privilèges"* ou de *"Classes de Privilèges"* différentes.

On peut enfin rassembler des *"Groupes de Privilèges"* entre eux. On définit à chaque fois une arborescence de niveau différent. Dans l'exemple du système de gestion d'accès sécurisés "AccessMaster" précité, on peut rattacher à un *"Groupe de Privilèges"* un objet final que l'on a appelé ci-dessus *"Rôle utilisateur".*

Les objets ci-dessus et leurs relations sont également saisis et stockés dans le base de données sécurisée.

Cette disposition permet de modéliser de façon plus aisée et complète les privilèges d'une organisation et facilite l'affectation de privilèges aux membres de cette organisation.

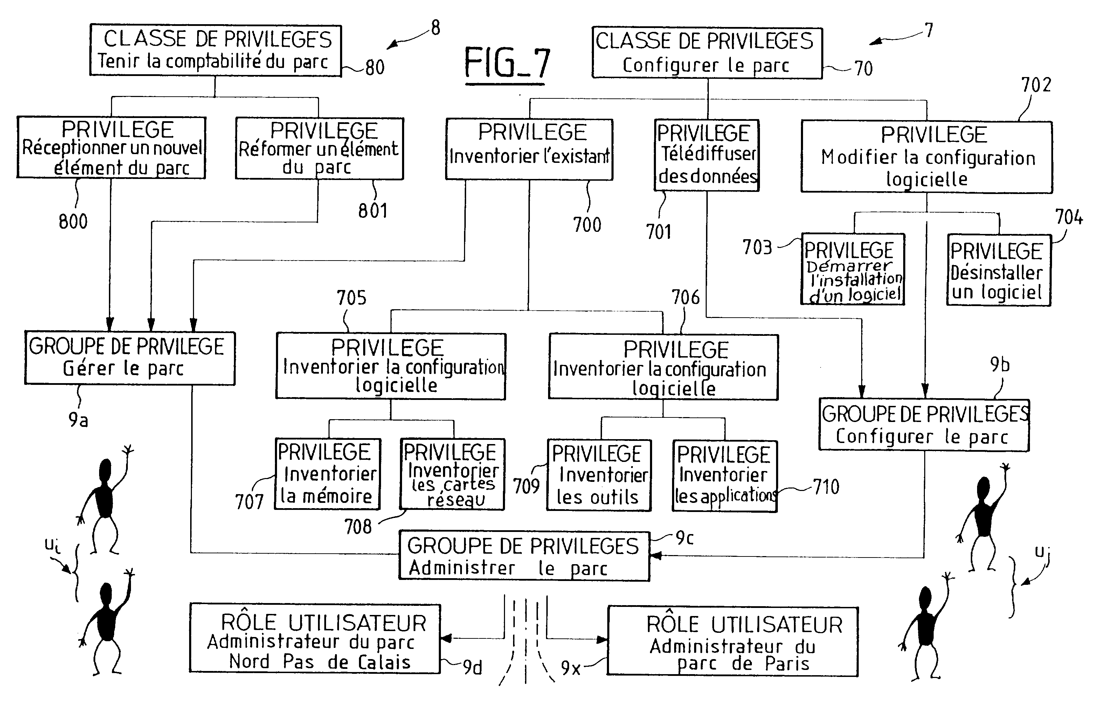

On obtient donc finalement une structure hiérarchique à superposition de graphes orientés, dont un exemple est représenté sur la figure 7. Cet exemple est relatif à un parc de matériels et logiciels informatiques répartis sur le territoire français.

Au niveau supérieur, on a représenté deux graphes orientés disjoints, 7 et 8, associés aux objets *"Classes de Privilèges"* nommés *"Tenir la comptabilité du parc"* 70 et *"Configurer le parc"* 80, respectivement.

Le premier niveau du graphe orienté 7, le plus élevé, comprend les objets *"Privilèges"* nommés *"Inventorier l'existant"* 700, *"Télédiffuser des données"* 701, et *"Modifier la configuration logicielle"* 702. Le deuxième niveau comprend les objets *"Inventorier la configuration matérielle"* 705 et *"Inventorier la configuration logicielle",* tous deux rattachés au noeud 700, et les objets *"Démarrer l'installation d'un logiciel"* 703 et *"Désinstaller un logiciel"* 704, tous deux rattachés au noeud 702. Le troisième niveau comprend les objets *"Inventorier la mémoire"* 707 et *"Inventorier les cartes réseaux"* 708, tous deux rattachés au noeud 705, et les objets *"Inventorier les outils"* 709 et *"Inventorier les applications"* 710, tous deux rattachés au noeud 706.

Une valeur de privilège, d'un niveau donné dans le graphe 7, implique toutes les valeurs de privilèges qui lui sont dérivées.

Le graphe orienté 8 ne comprend qu'un niveau d'objets *"Privilèges"* : les objets *"Réceptionner un nouvel élément du parc"* 800 et *"Réformer un élément du parc"* 801.

On a représenté sur la figure 7 deux objets *"Groupes de Privilèges"* d'un premier niveau. Le premier, 9a, est nommé *"Gérer parc"* et rassemble les objets *"Privilèges"* 700, du graphe orienté 7, et 800 et 801, du graphe orienté 8. Le second, 9*b*, rassemble les objets *"Privilèges"* 701 et 702, du graphe orienté 7.

Un objet *"Groupe de Privilèges"* 9*c* de second niveau, nommé *"Administrer le parc",* rassemble les *"Groupes de Privilèges"* 9*a* et 9*b*. Des objets *"Rôles* utilisateur", dont seulement deux, 9*d* et 9*x*, respectivement nommés *"Administrateur du parc Nord Pas de Calais"* et *"Administrateur du parc de Paris"* sont représentés sur la figure 7. Ces objets *"Rôles utilisateur",* 9*d* à 9*x*, sont rattachés à l'objet *"Groupe de Privilèges"* 9*c*.

Le *"Rôle utilisateur"* 9*d* représente donc une collection d'attributs, en l'occurrence de privilèges, partageables par un groupe d'utilisateurs *U*_{*i*}. Ces derniers sont, dans l'exemple décrit, des administrateurs du parc de matériel situé dans le Pas de Calais, et ont accès uniquement au parc situé dans cette région. Il en est de même pour les utilisateurs *U*_{*j*}, associés au *"Rôle* utilisateur" 9e. Ces derniers sont des administrateurs du parc de matériel situé à Paris, et ont accès uniquement au parc situé dans cette ville.

L'utilisation d'objets *"Groupes de Privilèges"* et *"Rôles utilisateur"* permet de simplifier l'affectation de privilèges à la fonction "administrateur", mais n'est pas strictement nécessaire.

De façon générale, pour allouer un privilège appartenant à l'un des graphes orientés, il est nécessaire de prévoir un champ de type donnée "graphe" dont la description précise que le nom est, soit *"tenir comptabilité du parc"* (graphe orienté 8), soit *"Configurer parc"* (graphe orienté 7). Si des privilèges appartenant aux deux arbres disjoints, 7 et 8, sont à attribuer à un objet "Personne", en l'absence de *"Groupes de Privilèges"* appropriés, on prévoit deux champs de type donnée "graphe" pour un même enregistrement. Le processus de traitement de données caractérisant une "Personne" ("Nom", "Prénom", etc.), y compris des données de type "graphe", peut s'effectuer de manière similaire à ce qui a été décrit en regard des figures 6A et 6B.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 4 à 7.

Il doit être clair aussi que, bien que particulièrement adaptée à la mise en oeuvre de "SGBDR" et à des applications de gestion de privilèges de sécurité, on ne saurait cantonner l'invention à ce seul type d'applications. Elle s'applique à chaque fois que l'on doit manipuler des valeurs ordonnées dans un espace fini.

**TABLEAU I**

| **Colonne** | **nom du champ** | **type** | **modificateur** |
|---|---|---|---|
| 1 | Nom | "chaîne" | *"conditions 1"* |
| 2 | date de naissance | "date" | *"conditions 2"* |
| ... | ... | ... | ... |
| *n*-1 | fonction | "chaîne" | *"conditions n-1"* |
| *n* | privilèges | "chaîne" | "conditions *n*" |

**TABLEAU II**

| **Nom de type** | **Nom de valeur** | **Nom de valeur dérivée** |
|---|---|---|
| *fonction dans l'entreprise* | *secrétaire* | *-* |
| *fonction dans l'entreprise* | *Responsable développement* | *Développeur* |
| *fonction dans l'entreprise* | *Responsable projet* | *Responsable développement* |

**TABLEAU III**

| | | | |
|---|---|---|---|
| **Nom** | **N° matricule** | **âge** | **fonction dans l'entreprise** |

**TABLEAU IV**

| **Colonne** | **nom du champ** | **type** | **modificateur** |
|---|---|---|---|
| 1 | Nom | "chaîne" | *"conditions 1"* |
| 2 | N° matricule | "entier" | *"conditions 2"* |
| 3 | âge | "entier" | *"conditions 3"* |
| 4 | *fonction dans l'entreprise* | "chaîne" | *"conditions 4"* |

**TABLEAU V**

| **Colonne** | **nom du champ** | **type** | **modificateur** |
|---|---|---|---|
| 1 | fonction dans l'entreprise | "chaîne" | *"conditions 1"* |
| 2 | valeur noeud | "chaîne" | *"conditions 2"* |
| 3 | liens | "chaîne" | *"conditions 3"* |

**TABLEAU VI**

| | | | |
|---|---|---|---|
| 4 | *fonction dans l'entreprise* | *"graphe"* | *"conditions 4"* |

## Revendications

1. Procédé de traitement dans un système informatique d'entités constituant des valeurs ordonnées dans un espace fini, les dites entités formant les noeuds d'un graphe orienté et étant liées entre elles par des relations déterminées constituant des branches dudit graphe orienté, chaque entité étant associée à au moins un attribut, caractérisé en ce qu'il consiste à saisir et à stocker dans des moyens de mémorisation un type de donnée défini par:
- un identifiant dudit graphe orienté (2);
- les valeurs de noeuds (20-25) dudit graphe orienté;
- les relations déterminées entre lesdites valeurs de noeuds (20-25);
et à retrouver, lorsqu'une entité dudit graphe est associée à un objet dudit type du système, des attributs de l'entité concernée, d'autres entités dudit graphe, ou encore des attributs d'autres entités dudit graphe, à l'aide d'un opérateur d'interprétation dudit graphe stocké dans des moyens de mémorisation.

2. Système de stockage dans un système informatique d'entités constituant des valeurs ordonnées dans un espace fini, les dites entités formant les noeuds d'un graphe orienté et étant liées entre elles par des relations déterminées constituant des branches dudit graphe orienté, chaque entité étant associée à au moins un attribut, caractérisé en ce qu'il comprend des moyens de mémorisation permettant de stocker les éléments suivants:
- un identifiant dudit graphe orienté (2);
- les valeurs de noeuds (20-25) dudit graphe orienté;
- les relations déterminées entre lesdites valeurs de noeuds (20-25);
- au moins un opérateur d'interprétation dudit graphe ;
et en ce qu'il comprend des moyens permettant, à partir des éléments stockés, de créer et manipuler un type de donnée susceptible de caractériser lesdites entités dudit graphe.

3. Système de stockage selon la revendication 2, caractérisé en ce que les moyens de mémorisation de l'identifiant dudit graphe orienté (2), des valeurs de noeuds (20-25) dudit graphe orienté et des relations entre lesdites valeurs de noeuds (20-25) sont constitués par une aire (5) d'enregistrement susceptible d'enregistrer des types de données reconnus et supportés par le système informatique et les moyens de mémorisation d'au moins un opérateur d'interprétation dudit graphe, par une aire (6) d'enregistrement susceptible d'enregistrer des opérateurs du type de ceux fournis en standard.

4. Système selon la revendication 2, caractérisé en ce que les moyens permettant de définir le type de donnée comprennent une interface (33) avec un système de stockage existant dans lequel une entité dudit graphe est associée à l'identifiant dudit graphe, l'identifiant étant de type connu, l'interface permettant d'associer à l'identifiant dudit graphe de type connu une table de données additionnelle « table spe » définissant le graphe à savoir l'identifiant de type connu, l'entité de type connu et les relations avec les autres entités de type connu, stocké dans lesdits moyens de mémorisation.

5. Système de gestion de bases de données (3') pour la gestion d'au moins une base de données comprenant au moins un lot de données (310-312) et mettant en oeuvre le procédé de traitement d'entités constituant des valeurs ordonnées (20-25) dans un espace fini (2) selon la revendication 1, ledit système (3') comprenant une première zone (31) pour le stockage desdits lots de données (310-312) et une seconde zone (30) pour le stockage d'enregistrements de données de description *(table 1)* de la structure de ces lots de données (310 312), ledit système (3') étant en outre associé à un logiciel dit applicatif (32) accédant auxdites deux zones (30, 31) pour le traitement desdits lots de données (310-312) données et desdits enregistrements (table 1), système (3') caractérisé en ce que lesdits enregistrements (*table 1*) comprennent au moins une donnée de description (*e*14) dont le contenu déterminé est associé à un identifiant particulier d'espace fini (2), en ce qu'il comprend une pièce de logiciel supplémentaire externe (33), coopérant avec ledit logiciel applicatif (32), destinée détecter ladite données de description de contenu prédéterminé (*e*14), et un enregistrement de données de description supplémentaire *(table spe)* décrivant la structure d'un lot de données supplémentaire *(Tag),* mémorisé dans ladite première zone (31) et stockant les caractéristiques de chacune desdites valeurs de noeuds (20-25) et desdites valeurs dérivées, pour chacun desdits espaces finis (2) associés auxdits identifiants, en ce que ladite pièce de logiciel supplémentaire (33), lors de ladite détection de donnée de description de contenu prédéterminé (*e*14), accède audit enregistrement de données de description supplémentaire (*table spe)* pour acquérir la structure dudit lot de données supplémentaires *(Tag),* de manière à pouvoir y retrouver des attributs de l'entité concernée, d'autres entités dudit graphe, ou encore des attributs d'autres entités dudit graphe..

6. Système de gestion de bases de données (3") pour la gestion d'au moins une base de données comprenant au moins un lot de données (310-312) et mettant en oeuvre le procédé de traitement d'entités constituant des valeurs ordonnées (20-25) dans un espace fini (2) selon la revendication 1 , ledit système (3") comprenant une première zone (31) pour le stockage desdits lots de données (310-312) et une seconde zone (30") pour le stockage d'enregistrements de données de description *(table 1, table 2)* de la structure de ces lots de données (310-312), ledit système (3") étant en outre associé à un logiciel dit applicatif (32) accédant auxdites deux zones (30-31) pour le traitement desdites données (310-312) et desdits enregistrements (*table 1*, *table 2),* système caractérisé en ce que ladite seconde zone de stockage (30") mémorise un opérateur spécifique (61) détectant une première zone particulière desdits enregistrements de données de description (*table 1*, *table 2)* indiquant que la donnée décrite est un type de donnée représentant des valeurs ordonnées (20-25) dans un espace fini (2), en ce ladite seconde zone (30") stocke une série d'enregistrements (51) décrivant les caractéristiques desdites valeurs de noeuds (20-25) et desdites valeurs dérivées, pour chacun desdits espaces finis (2) associés à auxdits identifiants, et en ce que ledit opérateur spécifique (61) accède au contenu d'une deuxième zone particulière desdits enregistrements de données de description *(table 1, table 2),* contenant une information de nom constituée par l'un desdits identifiants et recherche, dans ladite série d'enregistrements (51), lesdites valeurs de noeuds (20-25) et lesdits attributs desdites valeurs dérivées, correspondant audit identifiant d'espace fini (2).

7. Application du procédé de traitement d'entités selon la revendication 1, à un procédé de gestion de privilèges pour le contrôle d'accès à des ressources protégées, le privilège étant considéré comme une entité.

8. Application du procédé selon la revendication 7 , par des utilisateurs (*U*_{*i*}, *U*_{*j*}*),* à des ressources protégées, caractérisée en ce que ledit procédé de gestion comprend au moins les étapes suivantes :
- création d'une première série d'objets, dits privilèges (700-710, 800-801), représentant chacun un attribut associé à au moins un desdits utilisateurs (*U*_{*i*}, *U*_{*j*}*)* et déterminant des droits d'accès à au moins une desdites ressources, et saisie et stockage desdits objets (700-710, 800-801) dans des moyens de mémorisation ;
- création d'une seconde série d'objets, dits classes de privilèges (70, 80), chacun regroupant une série déterminée desdits objets privilèges (700-710, 800-801), et saisie et stockage desdits objets (70, 80) dans des moyens de mémorisation ;
- organisation desdits objets privilèges en un graphe orienté (7, 8), par la définition de relations existants entre lesdits objets privilèges, ceux-ci constituant des valeurs de noeuds (700-710, 800-801) dudit graphe (7, 8), et saisie et stockage desdites relations dans des moyens de mémorisation ; et
- attribution d'un type de données représentant des valeurs ordonnées d'un espace fini auxdits objets classes de privilèges (70, 80), de manière à affecter auxdits objets privilèges (700-710, 800-801) dudit graphe orienté (7, 8) les attributs des valeurs de noeuds qui leur sont dérivées par lesdites relations.

9. Type de donnée susceptible de caractériser des entités dans un système informatique, lesdites entités constituant des valeurs ordonnées dans un espace fini, lesdites entités formant les noeuds d'un graphe orienté et étant liées entre elles par des relations déterminées constituant des branches dudit graphe orienté, chaque entité étant associée à au moins un attribut, caractérisé en ce qu'il se définit par :
- un identifiant dudit graphe orienté (2) ;
- les valeurs de noeuds (20-25) dudit graphe orienté ;
- les relations déterminées entre lesdites valeurs de noeuds (20-25)
et par au moins une opération susceptible d'être effectuée sur lesdites entités de ce type à l'aide d'opérateur d'interprétation.

10. Système informatique comprenant des moyens permettant d'implémenter le type de donnée selon la revendication 9.
